Europäisches Patentamt

(19) European Patent Office

Office européen des brevets

(11) Veröffentlichungsnummer : **0 081 043**
**B1**

(12) **EUROPÄISCHE PATENTSCHRIFT**

(45) Veröffentlichungstag der Patentschrift :
30.12.86

(51) Int. Cl.⁴ : **F 16 J   7/00,** F 15 B 15/14

(21) Anmeldenummer : **82108247.6**

(22) Anmeldetag : **08.09.82**

(54) Kolbenstange mit Kolben.

(30) Priorität : **07.12.81 DE 3148377**

(43) Veröffentlichungstag der Anmeldung :
**15.06.83 Patentblatt 83/24**

(45) Bekanntmachung des Hinweises auf die Patenterteilung : **30.12.86 Patentblatt 86/52**

(84) Benannte Vertragsstaaten :
**AT CH DE FR GB IT LI**

(56) Entgegenhaltungen :
**GB-A-    150 259**
**GB-A-    278 528**
**US-E-     23 041**

(73) Patentinhaber : **WABCO Westinghouse Steuerungs-**
**technik GmbH & Co.**
**Bartweg 13 Postfach 91 12 70**
**D-3000 Hannover 91 (DE)**

(72) Erfinder : **Staske, Reiner**
**Klabundestrasse 32**
**D-3000 Hannover 61 (DE)**
Erfinder : **Göttling, Helmut**
**Fuhrenkamp 3**
**D-3004 Isernhagen 4 (DE)**
Erfinder : **Kruppa, Hans**
**Am Untergut 6 A**
**D-3013 Barsinghausen (DE)**
Erfinder : **Kemner, Axel**
**Dahlienweg 8**
**D-3004 Isernhagen (DE)**
Erfinder : **Kamke, Wolf-Dietrich**
**Ahornallee 10**
**D-3167 Burgdorf (DE)**
Erfinder : **Kröger, Dirk**
**Eichstrasse 21**
**D-3014 Laatzen (DE)**
Erfinder : **Möller, Rudolf**
**Knülweg**
**D-3007 Gehrden (DE)**
Erfinder : **Meyer, Ernst-August**
**Auf d. Kamp 18**
**D-3201 Algermissen (DE)**

(74) Vertreter : **Schrödter, Manfred**
**WABCO Westinghouse Fahrzeugbremsen GmbH Am**
**Lindener Hafen 21 Postfach 91 12 80**
**D-3000 Hannover 91 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Kolbenstange mit Kolben, insbesondere für Arbeitszylinder, gemäß dem Oberbegriff des Patentanspruchs 1.

Mit einem Kolben verbundene Kolbenstangen müssen, insbesondere dann, wenn sie in langhubigen Zylindern eingesetzt werden, eine hohe Oberflächengüte aufweisen.

Dies ist erforderlich, um die Reibung zwischen den die Kolbenstange umschließenden Dicht- und Führungselementen gering zu halten und eine zuverlässige Abdichtung zwischen Kolbenstange und der in der Stirnwand des Zylinders angeordneten Durchtrittsöffnung für die Kolbenstange zu erzielen.

Die gewünschte Oberflächengüte kann z. B. durch verchromen oder vernickeln erreicht werden.

Zur Verbindung des Kolbens mit der Kolbenstange bieten sich eine Schweiß-, Hartlöt- oder Schraubverbindung an.

Die Herstellung einer derartigen Kolbenstange mit Kolben ist, bedingt durch die Verwendung hochwertiger Stähle und Legierungen sowie durch die Vielzahl der notwendigen Arbeitsgänge wie Schleifen, Gewindeschneidung, Verchromen sehr zeitaufwendig und teuer.

Aus der GB-A-150, 259 ist eine Kolbenstange bekannt, die zum Teil mit einer Kunststoffummantelung versehen ist. Zur Verbindung mit einem Kolben ist die Kolbenstange in ihrem einen Endbereich abgesetzt und mit Gewinde versehen.

Die Verwendung einer Kunststoffummantelung für die Kolbenstange ermöglicht es, die Kolbenstange aus einem Material herzustellen, an dessen Oberflächengüte weniger hohe Ansprüche gestellt werden müssen, da die Gleitfläche für Dichtringe, Abstreifringe und Führungen vom Kunststoffmantel gebildet wird.

Von Nachteil ist bei dieser bekannten Kolbenstange jedoch, daß der Kolben sich nicht an jeder beliebigen Stelle auf der Kolbenstange anordnen läßt, sondern lediglich an einem der beiden Enden der Kolbenstange. Zu diesem Zweck ist ein Endbereich der Kolbenstange abzustufen und mit Gewinde zu versehen. Wird die Anordnung eines Kolbens z. B. im mittleren Bereich der Kolbenstange gewünscht, so ist die Befestigung des Kolbens verhältnismäßig schwierig.

Es könnte eine Befestigungsart gewählt werden, wie sie z. B. aus der US-E 23 041 bekannt ist. In die Mantelfläche der Kolbenstange wird eine spiralförmig ausgebildete Nut eingebracht, die als Bett für eine Spiralfeder dient. Auf das so gebildete Gewinde kann dann ein mit einer ein Innengewinde aufweisenden Längsbohrung versehener Kolben aufgeschraubt werden.

Diese bekannte Art der Kolbenbefestigung ist jedoch sehr aufwendig.

Der Erfindung liegt deshalb die Aufgabe zugrunde, eine Kolbenstange mit Kolben zu schaffen, die einfach in ihrer Herstellung ist und die die vorstehend angegebenen Anforderungen erfüllt.

Diese Aufgabe wird mit der im Patentanspruch angegebenen Erfindung gelöst.

Die Erfindung bietet den besonderen Vorteil, zur Herstellung der Kolbenstange mit Kolben genormte Materialien und Bauteile verwenden zu können, wie z. B. Gewindestange und Kunststoffschlauch. Durch die Verwendung einer Gewindestange als Basiskörper für die Kolbenstange und das überziehen der Gewindestange mit einem Kunststoffmantel erübrigt sich eine aufwendige Oberflächenbehandlung der Kolbenstange. Das bereits vorhandene Gewinde ermöglicht einerseits eine einfache Befestigung des Kolbens an der Kolbenstange und bietet andererseits eine einfache Anschlußmöglichkeit der Kolbenstange an vom Arbeitszylinder zu betätigende Einrichtungen.

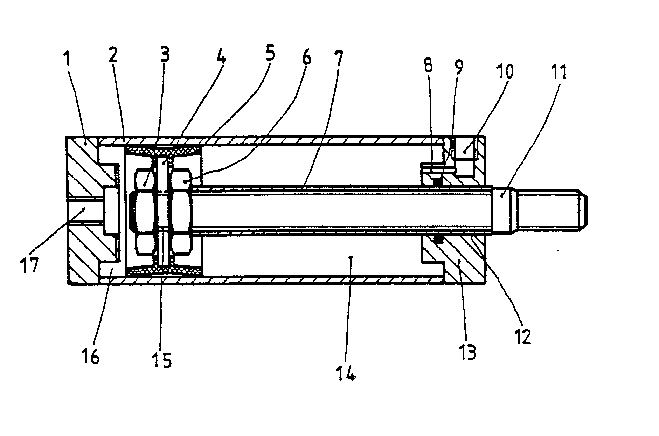

Anhand der Zeichnung wird ein Ausführungsbeispiel der Erfindung nachstehend näher erläutert.

Die Abbildung zeigt einen Arbeitszylinder mit Kolbenstange und Kolben im Schnitt, wobei die Kolbenstange mit einem Kunststoffmantel versehen und mit dem Kolben verschraubt ist.

In einem Zylindergehäuse 2, welches an seinen Stirnseiten von je einem Deckel 1 und 13 verschlossen ist, ist ein Kolben 4, 5 verschiebbar angeordnet, welcher den Zylinderraum in eine erste Druckmittelkammer 14 und eine zweite Druckmittelkammer 16 unterteilt. Der Kolben 4, 5 besteht aus einem scheibenförmigen Grundkörper 4, auf dessen Umfang ein Dichtelement 5 aufgeschnappt ist. Eine zentrisch in dem Grundkörper 4 angeordnete Ausnehmung 15 dient zur Aufnahme des einen Endes einer als Kolbenstange dienenden Gewindestange 11. Die Gewindestange 11 ist mittels einer ersten Mutter 6, welche auf der einen Seite des Grundkörpers 4 liegt und einer zweiten Mutter 3, welche auf der anderen Seite des Grundkörpers angeordnet ist, mit diesem verschraubt.

Der sich vom Kolben 4, 5 in Richtung auf das aus dem Zylindergehäuse 2 herausragende Ende der Gewindestange 11 zu erstreckende Bereich der Gewindestange 11 ist mit einem Kunststoffschlauch 7 überzogen, der als Gleitfläche für die Gewindestange 11 dient. Die aus Gewindestange 11 und Kunststoffschlauch 7 bestehende Kolbenstange 11, 7 wird in einer im Deckel 13 des Zylindergehäuses 2 vorgesehenen Führungsbohrung 12 gleitend geführt. In der Wandung der Führungsbohrung 12 ist eine umlaufende Nut angeordnet, in welcher ein die Kolbenstange 11, 7 umschließender Dichtring 9 gelagert ist.

Im kolbenstangenseitigen Deckel 13 des Zylindergehäuses 2 ist ein erster Druckmittelanschluß 10 vorgesehen, welcher über einen Kanal 8 mit der kolbenstangenseitigen Druckmittelkammer 14 in Verbindung steht. Ein zweiter Druckmittelanschluß 17 ist in dem Deckel 1 angeordnet, der die zweite Druckmittelkammer 16 begrenzt.

## Patentanspruch

Kolbenstange mit Kolben, insbesondere für Arbeitszylinder, mit folgenden Merkmalen :

a) der Kolben (4, 5) ist mit der Kolbenstange (11) mittels einer Schraubverbindung kraftschlüssig verbunden ;

b) Die Kolbenstange (11) ist wenigstens in ihrem als Lauffläche dienenden Bereich mit einem Kunststoffmantel (7) versehen ;

dadurch gekennzeichnet, daß die Kolbenstange (11) aus einer Gewindestange besteht, wobei die Kolbenstange wenigstens im Bereich ihrer Lauffläche von einem schlauchförmigen Kunststoffmantel (7) abgedeckt ist.

## Claim

Piston rod with piston, especially for a working cylinder, having the following features :

a) the piston (4, 5) is connected to the piston rod (11) in a positive manner by means of a screw connection ;

b) the piston rod (11) is provided with a plastics casing (7) at least in its area serving as a running surface ;

characterised in that the piston rod (11) consists of a threaded rod, the piston rod being covered at least in the region of its running surface by a tubular plastics casing (7).

## Revendication

Tige de piston avec piston, en particulier pour vérins mus par un fluide de pression, présentant les particularités suivantes :

a) le piston (4, 5) est relié par action de force à la tige de piston (11) par un assemblage vissé ;

b) la tige de piston (11) est pourvue, tout au moins dans sa partie servant de portée, d'une enveloppe en plastique (7),

caractérisé en ce que la tige de piston (11) est formée d'une tige filetée qui est recouverte, tout au moins sur sa partie formant portée, par une enveloppe en plastique en forme de tuyau (7).